# EUROPEAN PATENT SPECIFICATION

(11) **EP 3 172 868 B1**
(45) Date of publication and mention of the grant of the patent: **03.03.2021**
(21) Application number: 15767256.9
(22) Date of filing: 23.07.2015
(51) Int. Cl.: H04L 12/46, H04L 12/28

(54) **ELECTRONIC SYSTEM FOR TRANSMITTING DIGITAL SIGNALS ACCORDING TO INTERNET PROTOCOLS FOR HOME AUTOMATION SYSTEMS**
ELEKTRONISCHES SYSTEM ZUR ÜBERTRAGUNG VON DIGITALEN SIGNALEN GEMÄSS INTERNETPROTOKOLLEN FÜR DOMOTIKSYSTEME
SYSTÈME ÉLECTRONIQUE DESTINÉ À TRANSMETTRE DES SIGNAUX NUMÉRIQUES SELON DES PROTOCOLES INTERNET POUR DES SYSTÈMES DOMOTIQUES

(30) Priority: 24.07.2014 IT MI20141353
(43) Date of publication of application: 31.05.2017
(73) Proprietor: Bticino S.p.A., 21100 Varese (IT)
(72) Inventor: NOVATI, Daniele, I-22100 Como (CO) (IT); SANTINI, Ernesto, I-28060 Sozzago (NO) (IT); CATUOZZO, Marco, I-22036 Erba (CO) (IT); EUSEBIO, Emanuele, I-22070 Appiano Gentile (CO) (IT); PETRINI, Alberto, I-22037 Ponte Lambro (CO) (IT)
(74) Representative: Biallo, Dario
(86) International application number: PCT/IB2015/055593
(87) International publication number: WO 2016/012975

(56) References cited:
- WO-A1-2006/100515
- WO-A1-2007/090225
- WO-A1-2013/049897
- US-A1- 2013 083 805

## Description

The present invention refers to an electronic system for transmitting digital signals according to Internet protocols, particularly but not exclusively useful in the field of home automation.

Presently, the increasing use of digital technologies requires the use of communication channels having increasingly high bit-rates.

The Internet protocol stack, known with the abbreviation TCP/IP, is actually, at present, the standard on which the information exchange among devices inside a house unit is based.

The communication based on the TCP/IP protocols is performed in accordance with the IEEE802 standards and in particular with the IEEE802.3 standard for wired connections and with the IEEE802.11 standard for the wireless connections.

In the first case, in particular, it is known to use network cables such as the Ethernet cables in order to create a local network to which the aforesaid electronic devices are to be connected.

Such network cables can slide outside the walls or can be inserted into trunkings hidden in the walls, similarly to the cables of the electrical system. In the latter case, however, the network cables cannot be introduced into the same trunkings already occupied by the cables of the electrical system, since such a proximity would generate interference disturbances that would negatively affect the quality of the transmitted signals.

It is therefore necessary to make new trunkings exclusively dedicated to the wiring of the local data network that also need to have a large enough section to allow the easy sliding of the bulky Ethernet cables. In order to overcome the limits caused by the wiring of the local data networks, defined by the IEE802.3 standard, it is known to use data traffic management devices such as Wi-Fi routers capable of generating and controlling a plurality of wireless point-to-point connections with the electronic devices that one wishes to interconnect or connect to the Internet network. The quality and rapidity of the data transmission through the wireless networks thus made, however, depends on the number of devices connected to the data traffic management device and on the distance between each of them and the data traffic management device itself.

In order to overcome the drawbacks of the dedicated wiring and of the wireless networks, the new IEEE1901 standard was developed, defining the modulation techniques for transmitting TCP/IP digital signals through the electrical power supply line of the electrical system.

The techniques based on the IEEE1901 standard allow having a wide band digital channel that - even if also based on TCP/IP - avoids the complexity of the structured wiring and reduces the infrastructure cost of IEEE802.3.

Indeed, interface devices are currently available on the market and are made on the basis of the IEEE1901 standard, so as to connect on the one hand to the electrical outlets of the electrical system and on the other hand to the electronic devices that one wishes to interconnect or connect to the Internet network.

Such interface devices are capable of transmitting and receiving digital signals according to one or more of the Internet protocols, by actually using the line of the electrical system as if it were a network cable, thus avoiding making dedicated trunkings for the wiring of the data network, and simultaneously ensuring the connectability of two points of a building or of a home or commercial unit that would not be connectable by means of a wireless network.

The transmission of TCP/IP digital signals on the electrical power supply line of an electrical system nevertheless suffers from the drawback that lies in the fact that the electrical power supply line is placed at an operating voltage, e.g. 230 V in Italy, that is dangerous for man.

Therefore, it is necessary to actuate a series of technical expedients aimed at ensuring the electrical insulation of the interface devices and of their connection to the power supply line. WO2007/090225A1 describes a utility gateway device including a customer premises apparatus having a communication gateway adapted to interface at least one internal communication network with an external communication network, and a utility meter connected to the communication gateway so that the meter reading can be communicated to the utility supplier via the external communication network.

WO2006/100515A1 describes a control system for providing an IT structure for a building, the system including a plurality of interconnectible modular units each including Ethernet capability with I/O serial connections, a head end unit, and a room unit, the units being connected in series. WO2013/049897A1 discloses a system for distributing digital data and DC electrical power to a plurality of speakers over high-impedance cables having at least two conductive paths, wherein the system comprises a gateway device connected to a power source and a plurality of speakers connected to the cables via step-down transformers, and wherein digital data is exchanged over relatively high frequencies.

On the other hand, there are home automation systems that comprise a plurality of apparatuses, such as a video intercommunication system, a video camera, a plurality of switches and sensors, connected to each other by means of a line or a low-voltage two-wire home automation BUS.

However, such two-wire home automation BUS systems do not allow the transmission of bit rates TCP/IP protocols comparable to those of the Ethernet networks. The purpose of the present invention is to overcome the abovementioned drawbacks, and in particular that of devising an electronic system for transmitting digital signals according to Internet protocols that has low costs and is capable of ensuring a high level of safety for man.

Another purpose of the present invention is to provide an electronic system for transmitting digital signals according to Internet protocols that can be easily integrated in a home automation system.

These and other purposes according to the present invention are achieved by making an electronic system for transmitting digital signals according to Internet protocols as outlined in claim 1.

Further features of the electronic system for transmitting digital signals according to Internet protocols are the object of the dependent claims.

The features and advantages of an electronic system for transmitting digital signals according to Internet protocols according to the present invention will become clearer from the following exemplifying and nonlimiting description, referred to the attached schematic drawings in which:
- figure 1 is a block diagram of an embodiment of the electronic system for transmitting digital signals according to Internet protocols in accordance with the present invention;
- figure 2 is a block schematic view of a first embodiment of an interface device comprised in the electronic system of figure 1;
- figure 3 is a block schematic view of a second embodiment of an interface device comprised in the electronic system of figure 1;
- figure 4 is a block schematic view of a third embodiment of an interface device comprised in the electronic system of figure 1;
- figure 5 is a block schematic view of a fourth embodiment of an interface device comprised in the electronic system of figure 1;

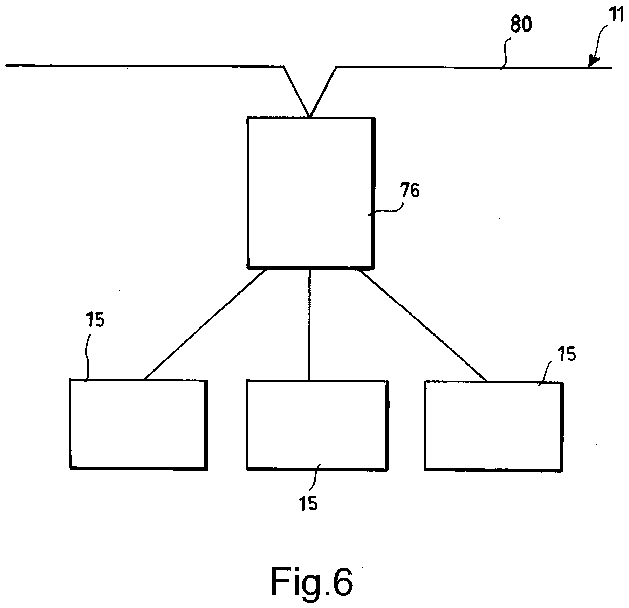

- figure 6 is a block schematic view of a possible configuration of the connection between a two-wire home automation BUS and a plurality of interface devices comprised in the electronic system of figure 1.

With reference to the figures, an electronic system for transmitting digital signals according to the Internet protocols for home automation systems is shown, overall indicated with reference number 10.

Such electronic system comprises a two-wire 80 home automation BUS 11 adapted to distribute electrical power supply and to transmit digital or analogue signals and power supply means 12 arranged to be connected to the two-wire home automation BUS 11 in order to supply direct voltage power.

The operating voltage of the home automation BUS 11 is therefore set by the power supply means 12 that can comprise, for example, a direct current power supply. The power supply means 12 can be connected to the wires of the home automation BUS 11 by interposing a power supply impedance 75, preferably consisting of an inductance connected in parallel to a resistor. The value of such inductance is determined on the basis of the need to provide power supply to the home automation BUS 11 without being subject to the voltage drop due to the resistor.

The two-wire 80 home automation BUS 11 operates at a very low safety voltage, i.e. it is of *Separated or Safety Extra-Low Voltage* or *SELV* type, preferably operating at a direct current voltage lower than 50V. More preferably the home automation BUS 11 operates at a direct current voltage comprised in the range 18-28V. Even more preferably the home automation BUS 11 operates at a direct current voltage comprised in the range 18-24V.

Therefore, the power supply means 12 can provide direct voltage power supply at a very low safety voltage, in order to supply power to the two-wire home automation BUS 11 at voltages preferably comprised in the abovementioned voltage ranges.

By very low safety voltage, as it is known, it is intended the direct current voltages lower than or equal to 120 V.

In any case, the home automation BUS 11 has insulating properties equal to those that a power supply line for an electrical system would have, i.e. a line intended to operate at voltages of about 230V.

The insulating sheaths that cover the wires 80 of the home automation BUS 11 have an electrical insulation level that allows such home automation BUS 11 to be inserted into the same trunkings occupied by the power supply line of the electrical system.

According to the present invention, the electronic system 10 also comprises at least one control apparatus 13 and at least one data transceiver apparatus 14. Hereinafter, the signals occupying a frequency band above 2MHz will be indicated as high frequency signals, whereas those occupying a band below 2MHz will be indicated as low frequency signals.

The at least one control apparatus 13 is advantageously configured for emitting low frequency digital control and/or information signals.

For example, such control apparatus 13 can be an electronic key switch or a control unit integrated in a control panel, like a touchscreen, or an actuator that controls the turning on of a lighting point or still a movement, temperature, humidity sensor and so on.

The at least one data transceiver apparatus 14 is advantageously configured for emitting and/or receiving high frequency modulated digital signals encoded according to the Internet protocols and for transmitting and/or receiving low frequency digital control and/or information signals. For example, the data transceiver apparatus 14 can be any apparatus capable of interfacing with the Internet network, such as a video intercommunication system IP, an intelligent household appliance, a personal computer, a router, a modem, a video camera IP, a television and so on. Thus, the data transceiver apparatus 14 can also be capable of transmitting and/or receiving baseband analogue audio signals, baseband video signals, and high fidelity stereo analogue audio signals.

In the present description, the term Internet protocols indicates the TCP/IP protocol stack and all the protocols of a higher level that use such stack as transport level.

The digital signals modulated and encoded according to the Internet protocols, indicated, for the sake of simplicity further on in the present description, as Internet signals, can carry the most different data, also including video and audio signals encoded according to the currently used standards such as the MPEG or MP3 encoding.

The electronic system 10 comprises at least two corresponding interface devices 15 arranged for connecting the at least one control apparatus 13 and the at least one data transceiver apparatus 14 to the home automation BUS 11.

Such interface devices 15 are power supplied by the power supply means 12 through the home automation BUS 11 and are, in particular, configured for transmitting and/or receiving low frequency digital control and/or information signals and, for the at least one data transceiver apparatus 14, also digital information signals that are high frequency modulated and encoded according to the Internet protocols.

At the termination of the two wires 80 of the home automation BUS 11, an impedance 74 is optionally provided that is adapted to the impedance of the home automation BUS 11 itself, in a manner such to minimise the possible reflected signals.

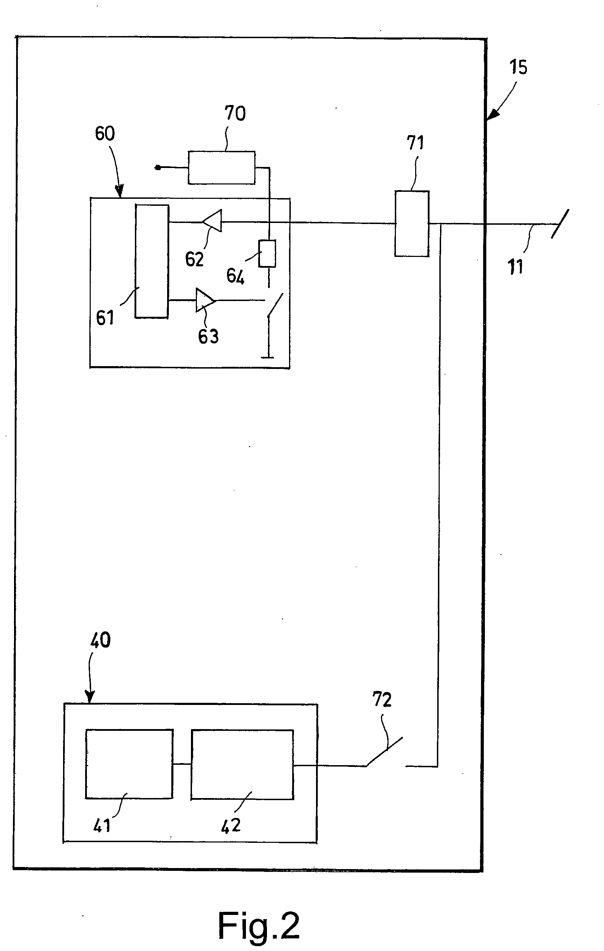

For the sake of simplicity, in figures 2 to 5 the two wires 80 of the home automation BUS 11 are illustrated with a single section.

The interface devices 15 comprise an impedance elevator circuit 70 capable of decoupling the power supply and the digital signals.

Such impedance elevator circuit 70 has low impedance for the power supply and high impedance for the digital signals.

Therefore, the power supply crosses the impedance elevator circuit 70, supplying a direct voltage for the polarisation of all the components of the interface devices.

In addition, the presence of the impedance elevator circuit 70 allows not to modify the power supply impedance 75, even in case of a high number of interface devices 15.

The interface devices 15 also comprise a transceiver module for receiving/transmitting low frequency digital control and/or information signals 60. Such transceiver module 60 comprises a microcontroller 61 capable of receiving a low frequency digital control signal by means of a reception circuit 62 and of transmitting one such signal by means of a transmission circuit 63. In particular, the transmission circuit 63 is selectively connected to the wires 80 of the home automation BUS 11 with the interposition of a load impedance 64.

In such a manner, during the transmission step, the signal sent by the transmission circuit 63 of the microcontroller 61 suffers from a voltage drop due to the voltage partition between the load impedance 64 and the power supply impedance 75; such a voltage drop is interpreted during the reception step as a binary "0" or "1" according to the preset encoding. Advantageously, the interface device 15 can also comprise a high frequency transceiver module for receiving/transmitting Internet signals 40.

In such a case, the interface device 15 is capable of connecting a data transceiver apparatus 14 to the home automation BUS 11, allowing the transmission and reception of digital information signals that are high frequency modulated and encoded according to the Internet protocols.

Preferably, the high frequency transceiver module for receiving/transmitting Internet signals 40 comprises an encoding/decoding circuit for encoding/decoding digital signals according to the Internet protocols 41 connected in cascade to a circuit for modulating/demodulating and encoding/decoding signals according to the IEEE1901 42 standard.

The TCP/IP signals modulated according to the IEEE1901 standard generally occupy the 2 MHz - 30 MHz band, but can occupy the 2 MHz - 80 Mhz band.

In this manner, the signals to be transmitted are first encoded according to the TCP/IP protocols and then encoded and modulated according to the IEEE1901 protocol.

In a corresponding manner, the signals received by the transceiver module 40 are first demodulated and decoded according to the IEEE1901 protocol and then decoded according to the TCP/IP protocols.

Preferably, the transceiver module for receiving/transmitting high frequency Internet signals 40 can be selectively connected to the home automation BUS 11 by means of first selector means 72, such as mechanical relays, electronic switches or a high impedance buffer circuit.

Such first selector means 72 close the connection with the home automation BUS 11 just when the microcontroller 61 receives an activation digital control signal.

Each interface device 15 is connected to the home automation BUS 11 preferably by means of the interposition of a block impedance 71 configured for obtaining an impedance profile of the common mode in order to limit the attenuations in the own band of the TCP/IP signal modulated according to IEEE1901 standard without altering the transmission and reception of the low frequency digital signals.

Such block impedance 71 can be made by means of two inductors, each passing on a respective wire 80; such inductors, for example, can have an inductance value comprised between 10 µH and 33 µH.

The block impedance 71 can comprise other impedances useful for decreasing the attenuation of the signal in the band 2 MHz - 80 MHz.

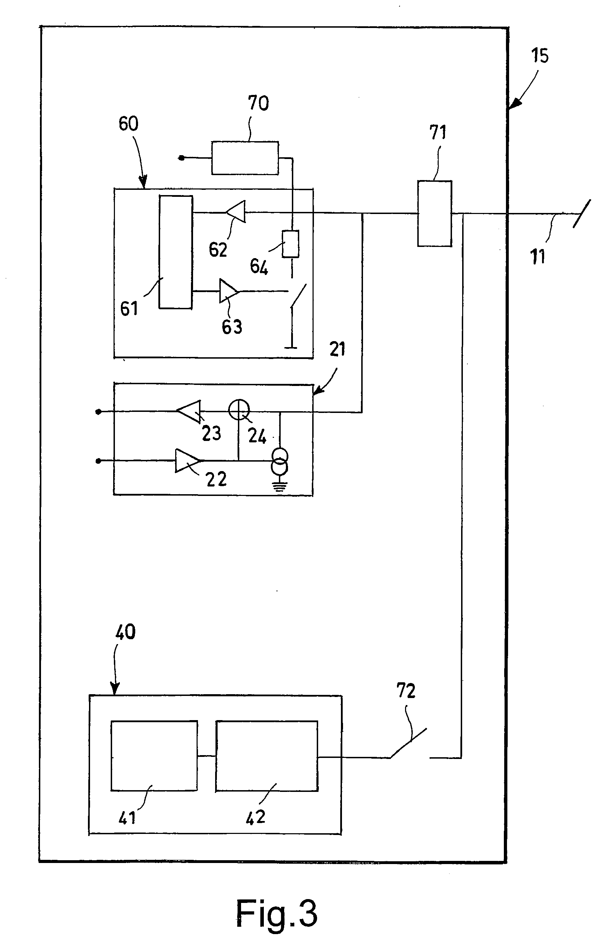

Preferably, at least one of the interface devices 15 comprises a circuit for the low frequency transmission and reception of a baseband analogue audio signal 21 that, as visible for example in figure 3, comprises a transmitter circuit 22, a receiver circuit 23 and an adder circuit 24 (also called "fork" or "hybrid" in the telephone field) for locally eliminating the transmitted signal from the reception chain. The power supply impedance 75 is also the reference point of the low frequency audio signal. The low frequency analogue audio signal is for example the voice signal acquired and transmitted by an intercommunication apparatus or by an interphone; the interface devices 15 provided with the circuit for the low frequency transmission and reception of a baseband analogue audio signal 21 can, therefore, allow connecting to the home automation BUS 11 intercommunication or interphone apparatuses as well. In such a case, on such a home automation BUS 11, it is also possible to transmit, at low frequency, a baseband analogue audio signal.

The band of the baseband analogue audio signal can be for example 300Hz-3kHz and the amplitude of the signal can be comprised between 0 and 600 mV.

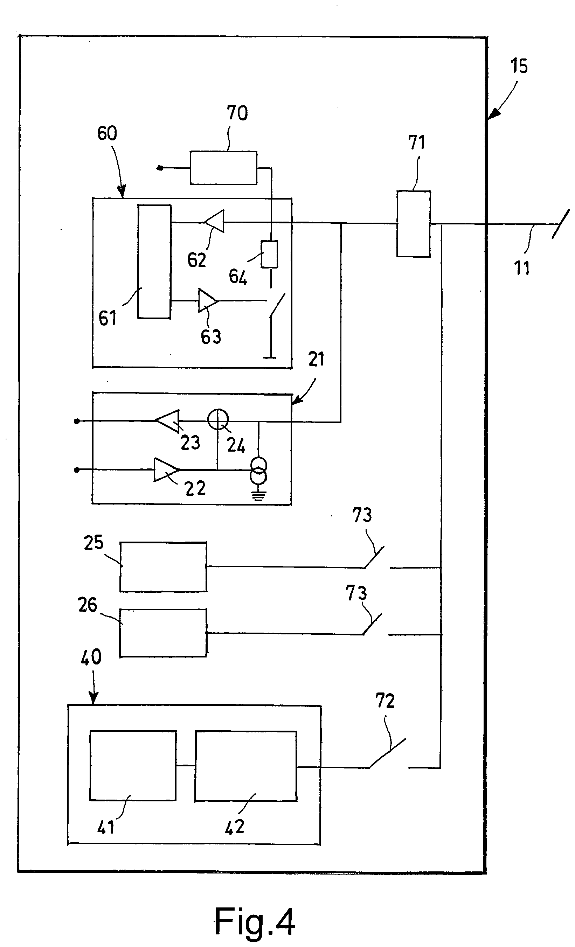

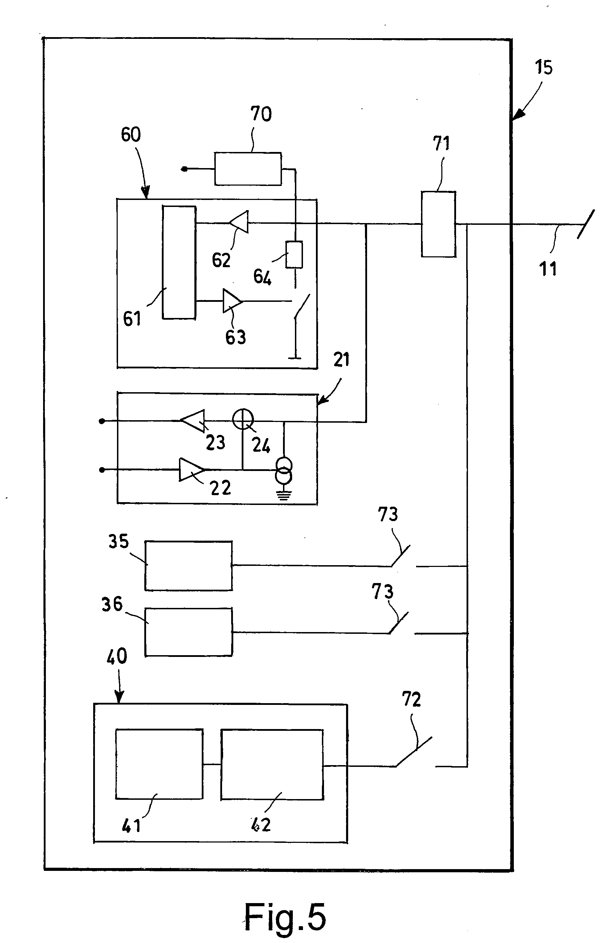

Preferably, at least one of the interface devices 15 comprises a high frequency modulating and encoding circuit for modulating and encoding a high fidelity stereo analogue audio signal 25, as for example illustrated in figure 4. Preferably, at least one of the interface devices 15 comprises a demodulating and decoding circuit for demodulating and decoding a high fidelity stereo analogue audio signal that is high frequency modulated 35, as for example illustrated in figure 5.

In the case in which the electronic system 10 comprises both interface devices 15 provided with the stereo modulating and encoding circuit 25 and interface devices 15 provided with the stereo demodulating and decoding circuit 35, the two-wire home automation BUS 11 is also capable of transmitting, at high frequency, high fidelity stereo analogue audio signals in order to allow listening, for example, to music in different places in the house unit.

The stereo audio signal can be, for example, frequency modulated around the carriers f1 = 5.5 MHz and f2 = 6 MHz, and have a band of 300 kHz (band @ -20db) for each channel. The amplitude of the signal can be for example equal to 39 dbmVrms ± 1db for each channel.

Preferably, at least one of the interface devices 15 comprises a high frequency modulating and encoding circuit for modulating and encoding a baseband analogue video signal 26, as for example illustrated in figure 4. Preferably, at least one of the interface devices 15 comprises a demodulating and decoding circuit for demodulating and decoding a baseband analogue video signal that is high frequency modulated 36, as for example illustrated in figure 5.

In the case in which the electronic system 10 comprises both interface devices 15 provided with the high frequency modulating and encoding circuit for modulating and encoding a baseband analogue video signal 26 and interface devices 15 provided with the demodulating and decoding circuit for demodulating and decoding a baseband analogue video signal that is high frequency modulated 36, the two-wire 80 home automation BUS 11 is also capable of transmitting, at high frequency, baseband analogue video signals in order to allow, for example, displaying images of the video intercommunication system on a monitor or the distribution of the baseband television signal among a plurality of televisions.

For example, the video signal can be transmitted in the DVB-T (terrestrial digital video broadcasting) format modulated around the intermediate frequency of 36 MHz, or alternatively modulated in amplitude at 44dbmVᵣₘₛ around the carrier 38.9MHz.

Preferably, the high frequency modulating and encoding circuit for modulating and encoding a high fidelity stereo analogue audio signal 25, the high frequency modulating and encoding circuit for modulating and encoding a baseband analogue video signal 26, the demodulating and decoding circuit for demodulating and decoding a stereo analogue audio signal that is high frequency modulated 35 and the demodulating and decoding circuit for demodulating and decoding a baseband analogue video signal that is high frequency modulated 36 can be selectively connected to the two wires of the home automation BUS 11 by means of second selector means 73 such as mechanical relays, electronic switches or a high impedance buffer circuit.

Such second selector means 73 close the connection with the home automation BUS 11 only when the microcontroller 61 receives an activation digital control signal.

Preferably, the electronic system 10 comprises at least one apparatus for generating an audio signal 16, for example a stereo system or a microphone or an intercommunication or interphone apparatus, and/or at least one apparatus for reproducing audio signal 17, for example a sound diffuser, arranged to be respectively connected to the two-wire 80 home automation BUS 11 by means of corresponding interface devices 15.

For example, in order to connect a stereo system to the home automation BUS 11, it is necessary to use an interface device 15 provided with the modulating and encoding circuit for modulating and encoding a high fidelity stereo analogue audio signal 25.

In addition or in alternative to such apparatuses, the electronic system 10 preferably comprises at least one video acquisition apparatus 18, for example a video camera, and/or at least one apparatus for reproducing a video signal 19, for example a monitor, arranged to be respectively connected to the two-wire 80 home automation BUS 11 by means of corresponding interface devices 15.

For example, in order to connect an external video intercommunication station to the home automation BUS 11, it is necessary to use an interface device 15 provided with the high frequency modulating and encoding circuit for modulating and encoding a baseband analogue video signal 25.

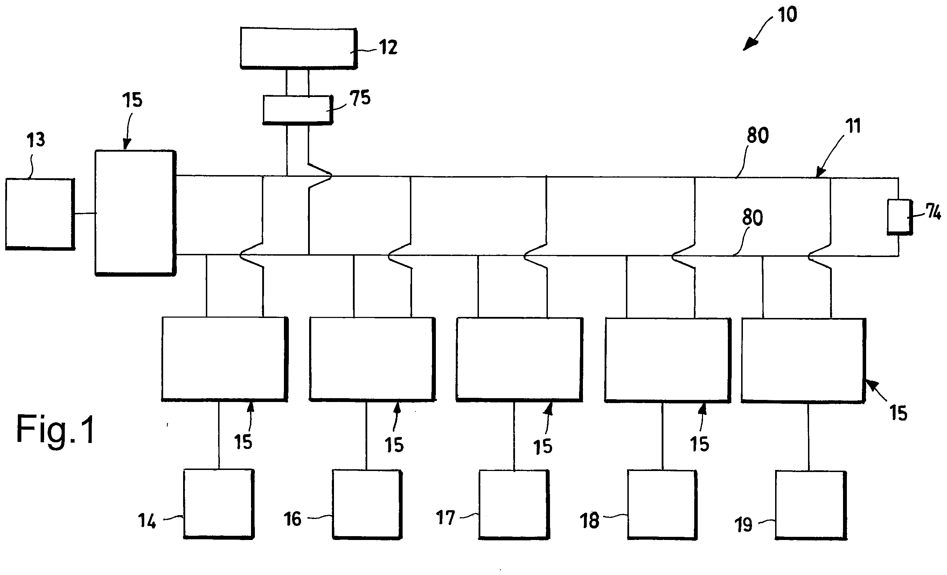

In the particular embodiment illustrated in figure 1 on the two-wire home automation BUS 11, power supply signals, digital control and/or information signals, baseband analogue audio signals, baseband video signals, high fidelity stereo analogue audio signals and digital signals modulated and encoded according to the Internet protocols can be simultaneously transmitted.

Depending on the apparatus that one wishes to connect to the home automation BUS 11, it is sufficient to select the most suitable interface device 15.

It is important to point out that the interface devices 15 can be integrated inside the apparatuses 13, 14, 16, 17, 19 to be connected to the home automation BUS 11, so as to be part thereof.

Alternatively, the interface devices 15 can be distinct from the aforesaid apparatuses; it is enough considering, for example, the case in which the data transceiver apparatuses 14 are household appliances or personal computers.

The transmission of different signals over the same transmission medium, i.e. the two-wire home automation BUS 11, is possible since such signals occupy different frequency bands.

In any case, the interface devices 15 can be connected to the wires 80 of the home automation BUS 11 according to a star topology as visible in figure 5 or according to a cascade topology as visible in figure 1.

According to the star topology, a plurality of interface devices 15 are connected to the wires 80 of the home automation BUS 11 by means of a diverter device 76.

Such device, in case of absence of analogue audio and video signals that are high frequency modulated, is a simple connection node thanks to the modulation characteristic according to the IEEE1901 standard that allows avoiding those band portions that suffer from reflections at the nodes of the network. Namely, the addition of the Internet data transmission by means of the IEEE1901 standard does not require the installation of dedicated devices such as the switches of the Ethernet network at the home automation BUS 11. According to the cascade topology, the interface devices 15 are connected in various points to the wires 80 of the home automation BUS 11. Since such interface devices 15 have low insertion losses, the flow of the high frequency digital signals is not perturbed.

In any case, each interface device 15 is connected to a single apparatus 13, 14, 16, 17, 19 and is not connectable to more than one apparatus.

Indeed, the electronic system 10 does not provide for the necessary use of a centralized module for distributing the various services (digital control and/or information signals, baseband analogue audio signals, baseband video signals, high fidelity stereo analogue audio signals and digital signals modulated and encoded according to the Internet protocols), but is provided with a plurality of distributed interface devices 15 that are connected to the same two-wire home automation BUS 11. The only centralized module provided is represented by the power supply means 12 useful for power supplying the home automation BUS 11 and hence for distributing the SELV electrical power supply to all the interface devices 15.

From the above description, the characteristics of the electronic system, object of the present invention, are clear, as well as the relative advantages.

In fact, the electronic system according to the present invention allows transmitting Internet signals over a SELV home automation BUS. Such two-wire home automation BUS can be installed in the same trunkings already occupied by the power supply line of the electrical system, ensuring safety, since it is placed at very low voltage, and quality of the transmitted signal.

The wiring of the electronic system, is therefore simple and does not require making new masonry works for the creation of new trunkings. In particular, the wiring of the electronic system is simplified with respect to the typical wiring of an Ethernet network with the known Ethernet cables.

The electronic system according to the present invention can also easily transmit Internet signals over a home automation BUS without increasing costs. The possibility of making a cascade topology and simultaneously also a star topology allows creating a data network with free topology, without the need of expensive apparatuses such as the switches generally used in the Ethernet networks.

In practice, the materials used as well, as the size, can be of any type in accordance with the technical requirements.

## Claims

1. Electronic system (10) for transmitting digital signals according to Internet protocols for home automation systems comprising:
- a two-wire (80) home automation BUS (11) adapted to distribute electrical power supply and to transmit digital and/or analogue signals, said two-wire (80) home automation BUS (11) operating at very low safety voltage, said very low safety voltage being lower than or equal to 120 volt ;
- power supply means (12) arranged to be connected to said home automation BUS (11) in order to supply direct voltage power;
- at least one control apparatus (13) configured for emitting and/or receiving low frequency digital control and/or information signals, wherein a low frequency signal is defined as a signal occupying a frequency band below 2 megahertz ;
- at least one data transceiver apparatus (14) configured for emitting and/or receiving high frequency modulated digital information signals encoded according to the Internet protocols and for transmitting and/or receiving low frequency control and/or information digital signals, wherein a high frequency signal is defined as a signal occupying a frequency band above 2 megahertz ;
- at least two corresponding interface devices (15) configured for connecting said at least one control apparatus (13) and said at least one data transceiver apparatus (14) to said home automation BUS (11), said interface devices (15) being powered by said power supply means (12) and being configured for transmitting and/or receiving low frequency digital control and/or information signals and, for said at least one data transceiver apparatus (14), also high frequency modulated digital information signals encoded according to the Internet protocols, one or more of said interface devices (15) comprising at least one transceiver module (60) for receiving/transmitting low frequency digital control and/or information signals and a transceiver module (40) for receiving/transmitting high frequency Internet signals.

2. Electronic system (10) for transmitting digital signals according to Internet protocols according to claim 1, wherein said transceiver module (40) for receiving/transmitting high frequency Internet signals comprises an encoding/decoding circuit for encoding/decoding digital signals according to the Internet protocols (41) that is connected in cascade to a circuit for modulating/demodulating and encoding/decoding signals according to the IEEE 1901 standard (42).

3. Electronic system for transmitting digital signals according to Internet protocols according to claim 2, wherein each of said interface devices (15) is connected to said home automation BUS (11) through the interposition of a block impedance (71) configured for obtaining an impedance profile of the common mode in order to limit the attenuation in the own band of the Internet signal modulated according to the IEEE 1901 standard.

4. Electronic system (10) for transmitting digital signals according to Internet protocols according to one of the preceding claims, wherein said transceiver module for receiving/transmitting high frequency Internet signals (40) is selectively connected to said home automation BUS (11) through first selector means (72) .

5. Electronic system (10) for transmitting digital signals according to Internet protocols according to one of the preceding claims, wherein at least one of said interface devices (15) comprises a circuit for transmitting and receiving a low frequency analogue audio signal (21).

6. Electronic system (10) for transmitting digital signals according to Internet protocols according to one of the preceding claims, wherein at least one of said interface devices (15) comprises a high frequency modulating and encoding circuit for modulating and encoding a high fidelity stereo analogue audio signal (25) .

7. Electronic system (10) for transmitting digital signals according to Internet protocols according to one of the preceding claims, wherein at least one of said interface devices (15) comprises a demodulating and decoding circuit for demodulating and decoding a high fidelity stereo analogue audio signal (35) that is high frequency modulated.

8. Electronic system (10) for transmitting digital signals according to Internet protocols according to one of the preceding claims, wherein at least one of said interface devices (15) comprises a high frequency modulating and encoding circuit for modulating and encoding a baseband analogue video signal (26).

9. Electronic system (10) for transmitting digital signals according to Internet protocols according to one of the preceding claims, wherein at least one of said interface devices (15) comprises a demodulating and decoding circuit for demodulating and decoding a baseband analogue video signal that is high frequency modulated (36).

10. Electronic system (10) for transmitting digital signals according to Internet protocols according to one of claims 5 to 9 comprising at least one apparatus for generating an audio signal (16) and/or at least one apparatus for reproducing an audio signal (17) configured for being respectively connected to said home automation BUS (11) by means of corresponding interface devices (15).

11. Electronic system (10) for transmitting digital signals according to Internet protocols according to claim 8 or 9 comprising at least one video acquisition apparatus (18) and/or at least one apparatus for reproducing a video signal (19) arranged to be connected to said home automation BUS (11) by means of corresponding interface devices (15).

## Patentansprüche

1. Elektronisches System (10) zur Übertragung von digitalen Signalen gemäß Internetprotokollen für Hausautomatisierungssysteme, umfassend:
- einen Zweidraht (80)-Heimautomatisierungs-BUS (11), der geeignet ist, die elektrische Stromversorgung zu verteilen und digitale und/oder analoge Signale zu übertragen, wobei der Zweidraht (80)-Heimautomatisierungs-BUS (11) bei einer sehr niedrigen Sicherheitsspannung arbeitet, wobei die sehr niedrige Sicherheitsspannung kleiner oder gleich 120 Volt ist;
- Stromversorgungsmittel (12), die so angeordnet sind, dass sie mit dem Hausautomatisierungs-BUS (11) verbunden werden können, um Gleichspannungsstrom zu liefern;
- mindestens ein Steuergerät (13), das zum Senden und/oder Empfangen von niederfrequenten digitalen Steuer- und/oder Informationssignalen konfiguriert ist, wobei ein niederfrequentes Signal als ein Signal definiert ist, das ein Frequenzband unter 2 Megahertz belegt;
- mindestens eine Daten-Sende-/Empfangsvorrichtung (14), die zum Senden und/oder Empfangen von hochfrequenzmodulierten digitalen Informationssignalen, die gemäß den InternetProtokollen kodiert sind, und zum Senden und/oder Empfangen von niederfrequenten digitalen Steuer- und/oder Informationssignalen konfiguriert ist, wobei ein Hochfrequenzsignal als ein Signal definiert ist, das ein Frequenzband über 2 Megahertz belegt;
- mindestens zwei entsprechende Schnittstellenvorrichtungen (15), die so konfiguriert sind, dass sie die mindestens eine Steuervorrichtung (13) und die mindestens eine Datensende- und - empfangsvorrichtung (14) mit dem Hausautomatisierungs-BUS (11) verbinden, wobei die Schnittstellenvorrichtungen (15) von den Stromversorgungsmitteln (12) gespeist werden und so konfiguriert sind, dass sie niederfrequente digitale Steuer- und/oder Informationssignale und für die mindestens eine Datensende-/Empfangsvorrichtung (14) auch hochfrequenzmodulierte digitale Informationssignale senden und/oder empfangen, die gemäß den Internetprotokollen codiert sind, wobei eine oder mehrere der Schnittstellenvorrichtungen (15) mindestens ein Sende-/Empfangsmodul (60) zum Empfangen/Senden von niederfrequenten digitalen Steuer- und/oder Informationssignalen und ein Sende-/Empfangsmodul (40) zum Empfangen/Senden von hochfrequenten Internetsignalen umfassen.

2. Elektronisches System (10) zum Übertragen von digitalen Signalen gemäß Internet-Protokollen nach Anspruch 1, wobei das Sende-/Empfangsmodul (40) zum Empfangen/Senden von Hochfrequenz-Internetsignalen eine Kodier-/Dekodierschaltung zum Kodieren/Dekodieren von digitalen Signalen gemäß den Internet-Protokollen (41) umfasst, die in Kaskade mit einer Schaltung zum Modulieren/Demodulieren und Kodieren/Dekodieren von Signalen gemäß der Norm IEEE 1901 (42) verbunden ist.

3. Elektronisches System zur Übertragung von digitalen Signalen gemäß Internetprotokollen nach Anspruch 2, wobei jede der Schnittstellenvorrichtungen (15) mit dem Hausautomatisierungs-BUS (11) über die Zwischenschaltung einer Blockimpedanz (71) verbunden ist, die so konfiguriert ist, dass sie ein Impedanzprofil des Gleichtakts erhält, um die Dämpfung im eigenen Band des gemäß der Norm IEEE 1901 modulierten Internetsignals zu begrenzen.

4. Elektronisches System (10) zum Übertragen von digitalen Signalen gemäß Internetprotokollen nach einem der vorhergehenden Ansprüche, wobei das Sende-/Empfangsmodul zum Empfangen/Senden von Hochfrequenz-Internetsignalen (40) über eine erste Auswahleinrichtung (72) selektiv mit dem Hausautomatisierungs-BUS (11) verbunden ist.

5. Elektronisches System (10) zur Übertragung von digitalen Signalen gemäß Internetprotokollen nach einem der vorhergehenden Ansprüche, wobei mindestens eine der Schnittstelleneinrichtungen (15) eine Schaltung zum Senden und Empfangen eines analogen Audiosignals (21) umfasst.

6. Elektronisches System (10) zur Übertragung von digitalen Signalen gemäß Internetprotokollen nach einem der vorhergehenden Ansprüche, wobei mindestens eine der Schnittstelleneinrichtungen (15) eine Hochfrequenz-Modulations- und Codierschaltung zur Modulation und Codierung eines analogen Stereo-Audiosignals (25) mit hoher Wiedergabetreue umfasst.

7. Elektronisches System (10) zur Übertragung von digitalen Signalen gemäß Internetprotokollen nach einem der vorhergehenden Ansprüche, wobei mindestens eine der Schnittstelleneinrichtungen (15) eine Demodulations- und Dekodierschaltung zur Demodulation und Dekodierung eines hochfrequenzmodulierten analogen Stereo-Audiosignals (35) mit hoher Wiedergabetreue aufweist.

8. Elektronisches System (10) zur Übertragung von digitalen Signalen gemäß Internetprotokollen nach einem der vorhergehenden Ansprüche, wobei mindestens eine der Schnittstelleneinrichtungen (15) eine Hochfrequenz-Modulations- und Codierschaltung zur Modulation und Codierung eines analogen Basisband-Videosignals (26) umfasst.

9. Elektronisches System (10) zur Übertragung von digitalen Signalen gemäß Internetprotokollen nach einem der vorhergehenden Ansprüche, wobei mindestens eine der Schnittstelleneinrichtungen (15) eine Demodulations- und Dekodierschaltung zur Demodulation und Dekodierung eines hochfrequenzmodulierten (36) analogen Basisband-Videosignals aufweist.

10. Elektronisches System (10) zur Übertragung von digitalen Signalen gemäß Internetprotokollen nach einem der Ansprüche 5 bis 9, das mindestens eine Vorrichtung zur Erzeugung eines Audiosignals (16) und/oder mindestens eine Vorrichtung zur Wiedergabe eines Audiosignals (17) umfasst, die so konfiguriert sind, dass sie jeweils über entsprechende Schnittstellenvorrichtungen (15) mit dem Heimautomatisierungs-BUS (11) verbunden sind.

11. Elektronisches System (10) zur Übertragung von digitalen Signalen gemäß Internetprotokollen nach Anspruch 8 oder 9, das mindestens eine Videoerfassungsvorrichtung (18) und/oder mindestens eine Vorrichtung zur Wiedergabe eines Videosignals (19) umfasst, die so angeordnet ist, dass sie mittels entsprechender Schnittstellenvorrichtungen (15) mit dem Heimautomatisierungs-BUS (11) verbunden werden können.

## Revendications

1. Système électronique (10) de transmission de signaux numériques selon des protocoles Internet pour des systèmes domotiques, comprenant :
- un bus domotique (11) à deux fils (80) adapté pour distribuer une alimentation en énergie électrique et pour transmettre des signaux numériques et/ou analogiques, ledit bus domotique (11) à deux fils (80) fonctionnant à très basse tension de sécurité, ladite très basse tension de sécurité étant inférieure ou égale à 120 volts ;
- des moyens d'alimentation électrique (12) agencés pour être connectés audit bus domotique (11) afin de fournir de l'énergie en tension continue ;
- au moins un appareil de commande (13) configuré pour émettre et/ou recevoir des signaux de commande et/ou d'informations numériques à basse fréquence, dans lequel un signal à basse fréquence est défini comme un signal occupant une bande de fréquences au-dessous de 2 mégahertz ;
- au moins un appareil émetteur-récepteur de données (14) configuré pour émettre et/ou recevoir des signaux d'informations numériques modulés à haute fréquence, codés selon les protocoles Internet, et pour transmettre et/ou recevoir des signaux numériques de commande et/ou d'informations à basse fréquence, dans lequel un signal à haute fréquence est défini comme un signal occupant une bande de fréquences au-dessus de 2 mégahertz ;
- au moins deux dispositifs d'interface correspondants (15) configurés pour connecter ledit au moins un appareil de commande (13) et ledit au moins un appareil émetteur-récepteur de données (14) audit bus domotique (11), lesdits dispositifs d'interface (15) étant alimentés par lesdits moyens d'alimentation électrique (12) et étant configurés pour transmettre et/ou recevoir des signaux de commande et/ou d'informations numériques à basse fréquence et, pour ledit au moins un appareil émetteur-récepteur de données (14), également des signaux d'informations numériques modulés à haute fréquence, codés selon les protocoles Internet, un ou plusieurs desdits dispositifs d'interface (15) comprenant au moins un module émetteur-récepteur (60) pour recevoir/transmettre des signaux de commande et/ou d'informations numériques à basse fréquence et un module émetteur-récepteur (40) pour recevoir/transmettre des signaux Internet à haute fréquence.

2. Système électronique (10) de transmission de signaux numériques selon des protocoles Internet selon la revendication 1, dans lequel ledit module émetteur-récepteur (40) pour recevoir/transmettre des signaux Internet à haute fréquence comprend un circuit de codage/décodage pour coder/décoder des signaux numériques selon les protocoles Internet (41) qui est connecté en cascade à un circuit pour moduler/démoduler et coder/décoder des signaux selon la norme IEEE 1901 (42) .

3. Système électronique de transmission de signaux numériques selon des protocoles Internet selon la revendication 2, dans lequel chacun desdits dispositifs d'interface (15) est connecté audit bus domotique (11) par l'interposition d'une impédance de bloc (71) configurée pour obtenir un profil d'impédance du mode commun de manière à limiter l'atténuation dans la propre bande du signal Internet modulé selon la norme IEEE 1901.

4. Système électronique (10) de transmission de signaux numériques selon des protocoles Internet selon une des revendications précédentes, dans lequel ledit module émetteur-récepteur pour recevoir/transmettre des signaux Internet à haute fréquence (40) est connecté de manière sélective audit bus domotique (11) par l'intermédiaire de premier moyens de sélecteur (72).

5. Système électronique (10) de transmission de signaux numériques selon des protocoles Internet selon une des revendications précédentes, dans lequel au moins un desdits dispositifs d'interface (15) comprend un circuit pour transmettre et recevoir un signal audio analogique à basse fréquence (21).

6. Système électronique (10) de transmission de signaux numériques selon des protocoles Internet selon une des revendications précédentes, dans lequel au moins un desdits dispositifs d'interface (15) comprend un circuit de modulation et de codage à haute fréquence pour moduler et coder un signal audio analogique stéréo haute fidélité (25).

7. Système électronique (10) de transmission de signaux numériques selon des protocoles Internet selon une des revendications précédentes, dans lequel au moins un desdits dispositifs d'interface (15) comprend un circuit de démodulation et de décodage pour démoduler et décoder un signal audio analogique stéréo haute fidélité (35) qui est modulé à haute fréquence.

8. Système électronique (10) de transmission de signaux numériques selon des protocoles Internet selon une des revendications précédentes, dans lequel au moins un desdits dispositifs d'interface (15) comprend un circuit de modulation et de codage à haute fréquence pour moduler et coder un signal vidéo analogique de bande de base (26).

9. Système électronique (10) de transmission de signaux numériques selon des protocoles Internet selon une des revendications précédentes, dans lequel au moins un desdits dispositifs d'interface (15) comprend un circuit de démodulation et de décodage pour démoduler et décoder un signal vidéo analogique de bande de base qui est modulé à haute fréquence (36).

10. Système électronique (10) de transmission de signaux numériques selon des protocoles Internet selon une des revendications 5 à 9, comprenant au moins un appareil pour générer un signal audio (16) et/ou au moins un appareil pour reproduire un signal audio (17) configurés pour être connectés respectivement audit bus domotique (11) au moyen de dispositifs d'interface correspondants (15).

11. Système électronique (10) de transmission de signaux numériques selon des protocoles Internet selon la revendication 8 ou 9, comprenant au moins un appareil d'acquisition vidéo (18) et/ou au moins un appareil pour reproduire un signal vidéo (19) agencés pour être connectés audit bus domotique (11) au moyen de dispositifs d'interface correspondants (15).
